(19) Europäisches Patentamt
European Patent Office
Office européen des brevets

(11) EP 4 468 391 A1

(12) EUROPEAN PATENT APPLICATION
published in accordance with Art. 153(4) EPC

(43) Date of publication:
27.11.2024 Bulletin 2024/48

(21) Application number: 22922048.8

(22) Date of filing: 09.11.2022

(51) International Patent Classification (IPC):
H01M 4/131 (2010.01)     H01M 4/36 (2006.01)
H01M 4/485 (2010.01)     H01M 4/505 (2010.01)
H01M 4/525 (2010.01)     H01M 10/0562 (2010.01)

(52) Cooperative Patent Classification (CPC):
H01M 4/131; H01M 4/36; H01M 4/485;
H01M 4/505; H01M 4/525; H01M 10/0562;
Y02E 60/10

(86) International application number:
PCT/JP2022/041716

(87) International publication number:
WO 2023/139897 (27.07.2023 Gazette 2023/30)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 21.01.2022 JP 2022007973

(71) Applicants:
• TOYOTA JIDOSHA KABUSHIKI KAISHA
Toyota-shi
Aichi 471-8571 (JP)

• Panasonic Holdings Corporation
Osaka, 571-8501 (JP)

(72) Inventors:
• SASAKI, Izuru
Toyota-shi, Aichi 471-8571 (JP)
• SUGIMOTO, Yuta
Toyota-shi, Aichi 471-8571 (JP)
• HASHIMOTO, Kazuya
Toyota-shi, Aichi 471-8571 (JP)

(74) Representative: Eisenführ Speiser
Patentanwälte Rechtsanwälte PartGmbB
Gollierstraße 4
80339 München (DE)

(54) BATTERY

(57) A battery 1000 according to one aspect of the present disclosure includes: a positive electrode 101; a negative electrode 103; and an electrolyte layer 102 disposed between the positive electrode 101 and the negative electrode 103, wherein the positive electrode 101 includes a positive electrode active material 104 and a first solid electrolyte material 105 coating at least a portion of a surface of the positive electrode active material 104, the first solid electrolyte material 105 includes Li, M1, and F, where M1 is at least one selected from the group consisting of Ti, Al, and Zr, and a ratio a of a capacity of the negative electrode 103 to a capacity of the positive electrode 101 satisfies $0.78 \leq a \leq 1.31$.

FIG.1

EP 4 468 391 A1

**Description**

TECHNICAL FIELD

The present invention relates to a battery.

BACKGROUND ART

Patent Literature 1 discloses a battery including, as a solid electrolyte, a halide including indium as a cation and, for example, chlorine, bromine, or iodine as an anion.

CITATION LIST

Patent Literature

Patent Literature 1: JP 2006-244734 A

SUMMARY OF INVENTION

Technical Problem

It is difficult to achieve both the durability of a battery and the energy density thereof by the conventional techniques. The durability and the energy density are generally in a trade-off relationship.

Solution to Problem

A battery according to one aspect of the present disclosure includes:

a positive electrode;
a negative electrode; and
an electrolyte layer disposed between the positive electrode and the negative electrode, wherein
the positive electrode includes a positive electrode active material and a first solid electrolyte material coating at least a portion of a surface of the positive electrode active material,
the first solid electrolyte material includes Li, M1, and F, where M1 is at least one selected from the group consisting of Ti, Al, and Zr, and
a ratio a of a capacity of the negative electrode to a capacity of the positive electrode satisfies $0.78 \leq a \leq 1.31$.

Advantageous Effects of Invention

The configuration of the battery of the present disclosure is suitable for achieving both the durability and the energy density.

BRIEF DESCRIPTION OF DRAWINGS

FIG. 1 is a cross-sectional view showing a schematic configuration of a battery 1000 of an embodiment.
FIG. 2 is a cross-sectional view showing a schematic configuration of a battery 2000 of the embodiment.
FIG. 3 is a graph showing the result of measuring a battery resistance of Comparative Example 3.
FIG. 4 is a graph showing a relation between a ratio a and a resistance increase rate.
FIG. 5 is a graph showing a relation between the ratio a and an actual discharge capacity.

DESCRIPTION OF EMBODIMENTS

(Findings on which the present disclosure is based)

According to Patent Literature 1, the potential of a positive electrode active material versus Li is desirably 3.9 V or less on average. Patent Literature 1 describes that, in this case, a film made of a decomposition product formed by oxidative decomposition of the solid electrolyte is formed favorably and excellent charge and discharge characteristics can be achieved. Patent Literature 1 discloses common layered transition metal oxides, such as $LiCoO_2$ and $LiNi_{0.8}Co_{0.15}Al_{0.05}O_2$, as positive electrode active materials whose potential versus Li is 3.9 V or less on average.

The present inventors studied durability in terms of oxidative decomposition of halide solid electrolytes. The study revealed that a battery including a fluorine-containing solid electrolyte coating at least a portion of the surface of a positive electrode active material exhibits high oxidation resistance and also has an enhanced durability. Moreover, the fluorine-containing solid electrolyte is stable even when the potential versus Li is 5 V or more. Therefore, especially when the potential of a positive electrode is high, the durability enhancement effect of coating the positive electrode active material is exhibited by the fluorine-containing solid electrolyte.

Furthermore, the present inventors focused on a capacity ratio between a capacity of the positive electrode and that of a negative electrode so that the durability enhancement effect of the fluorine-containing solid electrolyte would be maximized as actual battery properties. The term "capacity ratio" refers to a ratio of a charge capacity of a negative electrode to a charge capacity of a positive electrode.

When a battery is charged at a given battery voltage, a positive electrode potential and a negative electrode potential vary depending on the capacity ratio between a positive electrode and a negative electrode. A small capacity ratio decreases the positive electrode potential. A large capacity ratio increases the positive electrode potential. Therefore, in the case of using the positive electrode active material coated by the fluorine-containing solid electrolyte, an excellent durability is exhibited at a large capacity ratio, namely, a high positive electrode potential. However, when the capacity ratio is too large, a proportion of the negative electrode in the battery is so large that the energy density of the battery decreases. In conclusion, in order to achieve both the durability and the energy density, it is important to adjust the capacity ratio between a positive electrode and a negative electrode as appropriate.

The term "battery voltage" refers to the difference between the positive electrode potential and the negative electrode potential.

(Summary of one aspect according to the present disclosure)

A battery according to a first aspect of the present disclosure includes:

a positive electrode;
a negative electrode; and
an electrolyte layer disposed between the positive electrode and the negative electrode, wherein
the positive electrode includes a positive electrode active material and a first solid electrolyte material coating at least a portion of a surface of the positive electrode active material,
the first solid electrolyte material includes Li, M1, and F, where M1 is at least one selected from the group consisting of Ti, Al, and Zr, and
a ratio a of a capacity of the negative electrode to a capacity of the positive electrode satisfies $0.78 \leq a \leq 1.31$.

The configuration of the above battery is suitable for achieving both the durability and the energy density.

According to a second aspect of the present disclosure, for example, in the battery according to the first aspect, the first solid electrolyte material may include Ti as M1 and may further include one or two elements selected from the group consisting of Ca, Mg, Al, Y, and Zr. This configuration can further increase the ionic conductivity of the first solid electrolyte material.

According to a third aspect of the present disclosure, for example, in the battery according to the first or second aspect, the first solid electrolyte material may include a Li-Ti-Al-F compound. This configuration can further increase the ionic conductivity of the first solid electrolyte material.

According to a fourth aspect of the present disclosure, for example, in the battery according to the third aspect, the compound may have a composition represented by $Li_{2.7}Ti_{0.3}Al_{0.7}F_6$. This configuration can further increase the ionic conductivity of the first solid electrolyte material.

According to a fifth aspect of the present disclosure, for example, in the battery according to any one of the first to fourth aspects, the ratio a may be 0.91 or more. This configuration can further increase the durability of the battery.

According to a sixth aspect of the present disclosure, for example, in the battery according to any one of the first to fifth aspects, the ratio a may be 1.20 or less. This configuration can increase the durability and the energy density of the battery.

According to a seventh aspect of the present disclosure, for example, in the battery according to the sixth aspect, the ratio a may be 1.03 or less. This configuration can increase the durability and the energy density of the battery.

According to an eighth aspect of the present disclosure, for example, in the battery according to any one of the first to seventh aspects, the positive electrode may further include a second solid electrolyte material, and the second solid electrolyte material may have a composition different from a composition of the first solid electrolyte material. This configuration can increase the output of the battery and the safety of the battery.

According to a ninth aspect of the present disclosure, for example, in the battery according to the eighth aspect, the second solid electrolyte material may include a sulfide solid electrolyte. This configuration can increase the output of the battery.

According to a tenth aspect of the present disclosure, for example, in the battery according to the eighth or ninth aspect, the positive electrode active material and the second solid electrolyte material may be separated by the first solid electrolyte material. This configuration can further enhance the durability of the battery.

According to an eleventh aspect of the present disclosure, for example, in the battery according to any one of the first to tenth aspects, the positive electrode active material may include lithium nickel cobalt manganese oxide. This configuration can further increase the energy density of the battery and the charge and discharge efficiency of the battery.

According to a twelfth aspect of the present disclosure, for example, in the battery according to any one of the first to eleventh aspects, the negative electrode may include a negative electrode active material, and the negative electrode active material may include an oxide material. This configuration can increase the output of the battery and the capacity of the battery.

According to a thirteenth aspect of the present disclosure, for example, in the battery according to the twelfth aspect, the oxide material may be lithium titanate. This configuration can increase the output of the battery and enhance the durability of the battery.

Hereinafter, an embodiment of the present disclosure will be described with reference to the drawings. The present disclosure is not limited to the following embodiment.

(Embodiment)

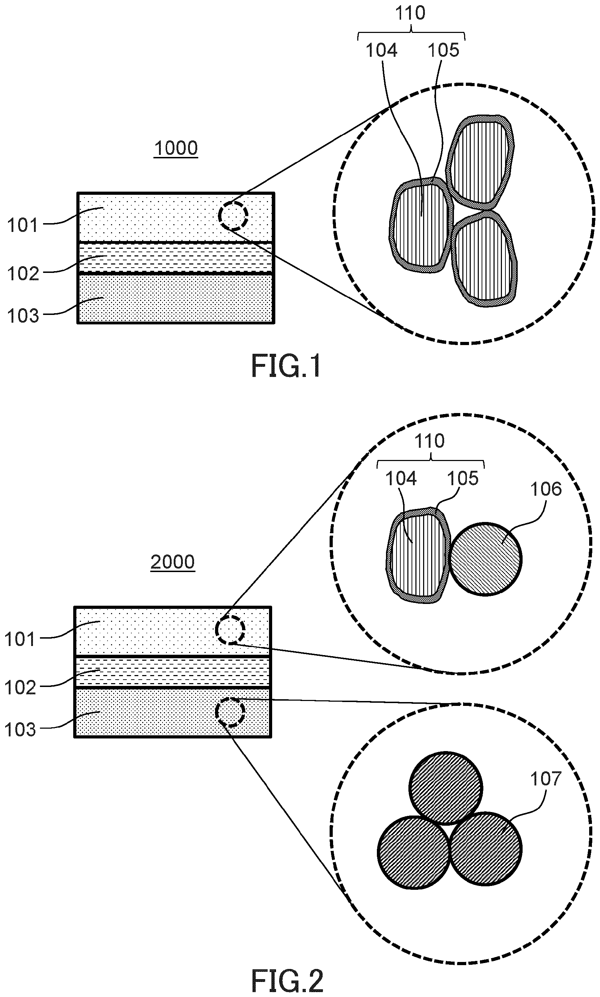

FIG. 1 is a cross-sectional view showing a schematic configuration of a battery 1000 of the embodiment.

The battery 1000 includes a positive electrode 101, an electrolyte layer 102, and a negative electrode 103. The electrolyte layer 102 is disposed between the positive electrode 101 and the negative electrode 103. The positive electrode 101 includes a positive electrode active material 104 and a first solid electrolyte material 105. The first solid electrolyte material 105 coats at least a portion of a surface of the positive electrode active material 104. The first solid electrolyte material 105 includes Li, M1, and F. The symbol M1 is at least one selected from the group consisting of Ti, Al, and Zr. A ratio a (= Cn/Cp) of a capacity Cn of the negative electrode 103 to a capacity Cp of the positive electrode 101 satisfies $0.78 \leq a \leq 1.31$.

The above configuration of the battery 1000 is suitable for achieving both the durability and the energy density.

When the ratio a is less than 0.78, a durability enhancement effect of the first solid electrolyte material 105 is small. When the ratio a is too small, the positive electrode 101 is not sufficiently charged and the energy density of the battery 1000 decreases. When the ratio a is more than 1.31, a proportion of the negative electrode 103 in the battery 1000 is too large and thus the energy density of the battery 1000 decreases.

The ratio a may be 0.91 or more.

The above configuration cam further increase the durability of the battery 1000.

The ratio a may be 1.20 or less.

The above configuration can increase the durability and the energy density of the battery 1000.

The ratio a may be 1.03 or less.

The above configuration can increase the durability and the energy density of the battery 1000.

The positive electrode active material 104 and the first solid electrolyte material 105 compose a coated active material 110.

The first solid electrolyte material 105 is a fluorine-containing solid electrolyte material. The first solid electrolyte material 105 including at least one selected from the group consisting of Ti, Al, and Zr as M1 is likely to exhibit a high ionic conductivity. Thus, the output of the battery 1000 can be increased.

To further increase the lithium ion conductivity, the first solid electrolyte material 105 may substantially consist of Li, M1, and F. Saying that "the first solid electrolyte material substantially consists of Li, M1, and F" means that a molar ratio of a sum of the amounts of substance of Li, M1, and F to a sum of the amounts of substance of all elements of the first solid electrolyte material 105 is 90% or more. In one example, the molar ratio may be 95% or more.

To further increase the lithium ion conductivity, the first solid electrolyte material may consist only of Li, M1, and F.

In the first solid electrolyte material 105, M1 may be at least one selected from the group consisting of Ti and Al.

According to the above configuration, the first solid electrolyte material 105 has a high ionic conductivity and a high oxidation resistance.

In the first solid electrolyte material 105, M1 may be Zr.

According to the above configuration, the first solid electrolyte material 105 may exhibit a higher ionic conductivity. Hence, an interfacial resistance between the positive electrode active material 104 and the first solid electrolyte material 105 can be decreased.

The first solid electrolyte material 105 may include $Li_2ZrF_6$. In other words, a composition of the first solid electrolyte material 105 may be $Li_2ZrF_6$.

According to the above configuration, the first solid electrolyte material 105 may exhibit a higher ionic conductivity. Hence, the interfacial resistance between the positive electrode active material 104 and the first solid electrolyte material 105 can be decreased.

The first solid electrolyte material 105 may include Ti as M1 and may further include one or two elements selected from the group consisting of Ca, Mg, Al, Y, and Zr.

The above configuration can further increase the ionic conductivity of the first solid electrolyte material 105. Hence, it is possible to maintain the durability of the battery 1000 and enhance the output of the battery 1000.

The first solid electrolyte material 105 may include a Li-Ti-Al-F compound. The Li-Ti-Al-F compound is a compound including Li, Ti, Al, and F. The compound may include only Li, Ti, Al, and F, except for inevitable impurities. The first solid electrolyte material 105 may be the compound.

The above configuration can further increase the ionic conductivity of the first solid electrolyte material 105. Hence, it is possible to maintain the durability of the battery 1000 and enhance the output of the battery 1000.

The Li-Ti-Al-F compound may have a composition represented by $Li_{6-(4-x)b}(Ti_{1-x}Al_x)_bF_6$ ($0 < x < 1$ and $0 < b \le 1.5$).

The Li-Ti-Al-F compound may have a composition represented by $Li_{3-x}Ti_xAl_{1-x}F_6$ ($0 < x < 1$).

The above configuration can further increase the ionic conductivity of the first solid electrolyte material 105. Hence, it is possible to maintain the durability of the battery 1000 and enhance the output of the battery 1000.

In one example, the Li-Ti-Al-F compound has a composition represented by $Li_{2.7}Ti_{0.3}Al_{0.7}F_6$.

The above configuration can further increase the ionic conductivity of the first solid electrolyte material 105. Hence, it is possible to maintain the durability of the battery 1000 and enhance the output of the battery 1000.

The Li-Ti-Al-F compound may have a composition represented by $Li_{2.6}Ti_{0.4}Al_{0.6}F_6$.

The above configuration can further increase the ionic conductivity of the first solid electrolyte material 105. Hence, it is possible to maintain the durability of the battery 1000 and enhance the output of the battery 1000.

The first solid electrolyte material 105 may include at least one selected from the group consisting of a Li-Ti-Mg-F compound such as $Li_3Ti_{0.5}Mg_{0.5}F_6$, a Li-Ti-Ca-F compound such as $Li_3Ti_{0.5}Ca_{0.5}F_6$, and a Li-Ti-Zr-F compound such as $Li_3Ti_{0.5}Zr_{0.5}F_7$.

The first solid electrolyte material 105 may be free of sulfur. The above configuration can reduce generation of a hydrogen sulfide gas. Therefore, a battery with enhanced safety can be achieved.

FIG. 2 is a cross-sectional view showing a schematic configuration of a battery 2000 of the embodiment.

In the battery 2000, the positive electrode 101 further includes a second solid electrolyte material 106. The second solid electrolyte material 106 has a composition different from the composition of the first solid electrolyte material 105.

This configuration can increase the output of the battery 2000 and the safety of the battery 2000.

The second solid electrolyte material 106 may include a sulfide solid electrolyte. Sulfide solid electrolytes have a small Young's modulus and a high deformability. Therefore, by using a sulfide solid electrolyte as the second solid electrolyte material 106, the second solid electrolyte material 106 and the positive electrode active material 104 (or the coated active material 110) are closely joined, and thus an interfacial resistance therebetween can be decreased. Moreover, sulfide solid electrolytes have a higher ionic conductivity than other solid electrolytes such as oxide solid electrolytes.

This configuration can increase the output of the battery 2000.

$Li_2S-P_2S_5$, $Li_2S-SiS_2$, $Li_2S-B_2S_3$, $Li_2S-GeS_2$, $Li_{3.25}Ge_{0.25}P_{0.75}S_4$, $Li_{10}GeP_2S_{12}$, or the like can be used as the sulfide solid electrolyte included in the second solid electrolyte material 106. Alternatively, an argyrodite sulfide solid electrolyte, which is typically $Li_6PS_6Cl$, $Li_6PS_5Br$, or $Li_6PS_5I$, can be used. LiX, $Li_2O$, $MO_q$, and $Li_pMO_q$ may be added to these. The symbol X is at least one selected from the group consisting of F, Cl, Br, and I. The symbol M is at least one selected from the group consisting of P, Si, Ge, B, Al, Ga, In, Fe, and Zn. The symbols p and q are each independently a natural number.

The above configuration can further enhance the ionic conductivity of the second solid electrolyte material 106. Thus, the charge and discharge efficiency of the battery 2000 can further be enhanced.

The second solid electrolyte material 106 may include at least one selected from the group consisting of a halide solid electrolyte, an oxide solid electrolyte, a polymer gel electrolyte, and a complex hydride solid electrolyte.

The above configuration can increase the thermal stability of the positive electrode 101 and can enhance the output thereof. In particular, since the halide solid electrolyte is a material having a high thermal stability and a high ionic conductivity, a higher effect can be obtained using the halide solid electrolyte.

The halide solid electrolyte may be a material represented by the following composition formula (1).

$$Li_aM_\beta X_\gamma \qquad \text{Formula (1)}$$

Here, α, β, and γ are each independently a value greater than 0.

The symbol M includes at least one element selected from the group consisting of metalloid elements and metal elements other than Li. The symbol M may be at least one element selected from the group consisting of metalloid elements and metal elements other than Li.

The symbol X includes at least one selected from the group consisting of F, Cl, Br, and I. The symbol X may be at least one selected from the group consisting of F, Cl, Br, and I.

The above configuration can further enhance the ionic conductivity of the halide solid electrolyte. Thus, the output properties of the battery 2000 are further enhanced.

The metalloid elements are B, Si, Ge, As, Sb, and Te.

The metal elements are all the elements included in Groups 1 to 12 of the periodic table except hydrogen and all the elements included in Groups 13 to 16 except B, Si, Ge, As, Sb, Te, C, N, P, O, S, and Se. That is, the metal elements refer to a group of elements that can become cations when forming an inorganic compound with a halogen compound.

In the composition formula (1), M may include Y (= yttrium).

That is, the halide solid electrolyte may include Y as a metal element.

The above configuration can further enhance the ionic conductivity of the halide solid electrolyte. Thus, the output properties of the battery 2000 are further enhanced.

The Y-including halide solid electrolyte may be, for example, a compound represented by a composition formula $Li_aMe_bY_cX_6$. Here, $a + mb + 3c = 6$ and $c > 0$ are satisfied. The symbol Me is at least one element selected from the group consisting of metal elements, except Li and Y, and metalloid elements. The symbol m is the valence of Me.

At least one selected from the group consisting of Mg, Ca, Sr, Ba, Zn, Sc, Al, Ga, Bi, Zr, Hf, Ti, Sn, Ta, and Nb may be used as Me.

The above configuration can further enhance the ionic conductivity of the halide solid electrolyte.

In the composition formula (1), $2.5 \le \alpha \le 3$, $1 \le \beta \le 1.1$, and $\gamma = 6$ may be satisfied.

The above configuration can further enhance the ionic conductivity of the halide solid electrolyte. Thus, the output properties of the battery 2000 can further be enhanced.

The halide solid electrolyte may be represented by the following composition formula (A1).

$$Li_{6-3d}Y_dX_6 \qquad \text{Formula (A1)}$$

In the composition formula (A1), X is two or more elements selected from the group consisting of F, Cl, Br, and I.

In the composition formula (A1), $0 < d < 2$ is satisfied.

The above configuration can further enhance the ionic conductivity of the halide solid electrolyte. Thus, the charge and discharge efficiency of the battery 2000 can further be enhanced.

The halide solid electrolyte may be represented by the following composition formula (A2).

$$Li_3YX_6 \qquad \text{Formula (A2)}$$

In the composition formula (A2), X is two or more elements selected from the group consisting of F, Cl, Br, and I.

The above configuration can further enhance the ionic conductivity of the halide solid electrolyte. Thus, the charge and discharge efficiency of the battery 2000 can further be enhanced.

The halide solid electrolyte may be represented by the following composition formula (A3).

$$Li_{3-3\delta}Y_{1+\delta}Cl_6 \qquad \text{Formula (A3)}$$

In the composition formula (A3), $0 < \delta \le 0.15$ is satisfied.

The above configuration can further enhance the ionic conductivity of the halide solid electrolyte. Thus, the charge and discharge efficiency of the battery 2000 can further be enhanced.

The halide solid electrolyte may be represented by the following composition formula (A4).

$$Li_{3-3\delta}Y_{1+\delta}Br_6 \qquad \text{Formula (A4)}$$

In the composition formula (A4), $0 < \delta \le 0.25$ is satisfied.

The above configuration can further enhance the ionic conductivity of the halide solid electrolyte. Thus, the charge and discharge efficiency of the battery 2000 can further be enhanced.

The halide solid electrolyte may be represented by the following composition formula (A5).

$$Li_{3-3\delta+a}Y_{1+\delta-a}Me_aCl_{6-x-y}Br_xI_y \qquad \text{Formula (A5)}$$

In the composition formula (A5), Me includes at least one selected from the group consisting of Mg, Ca, Sr, Ba, and Zn. The symbol Me may be at least one element selected from the group consisting of Mg, Ca, Sr, Ba, and Zn.

In the composition formula (A5), $-1 < \delta < 2$, $0 < a < 3$, $0 < (3-3\delta+a)$, $0 < (1+\delta-a)$, $0 \leq x \leq 6$, $0 \leq y \leq 6$, and $(x+y) \leq 6$ are satisfied.

The above configuration can further enhance the ionic conductivity of the halide solid electrolyte. Thus, the charge and discharge efficiency of the battery 2000 can further be enhanced.

The halide solid electrolyte may be represented by the following composition formula (A6).

$$Li_{3-3\delta}Y_{1+\delta-a}Me_aCl_{6-x-y}Br_xI_y \qquad \text{Formula (A6)}$$

In the composition formula (A6), Me includes at least one selected from the group consisting of Al, Sc, Ga, and Bi. The symbol Me may be at least one element selected from the group consisting of Al, Sc, Ga, and Bi.

In the composition formula (A6), $-1 < \delta < 1$, $0 < a < 2$, $0 < (1+\delta-a)$, $0 \leq x \leq 6$, $0 \leq y \leq 6$, and $(x+y) \leq 6$ are satisfied.

The above configuration can further enhance the ionic conductivity of the halide solid electrolyte. Thus, the charge and discharge efficiency of the battery 2000 can further be enhanced.

The halide solid electrolyte may be represented by the following composition formula (A7).

$$Li_{3-3\delta-a}Y_{1+\delta-a}Me_aCl_{6-x-y}Br_xI_y \qquad \text{Formula (A7)}$$

In the composition formula (A7), Me includes at least one selected from the group consisting of Zr, Hf, and Ti. The symbol Me may be at least one selected from the group consisting of Zr, Hf, and Ti.

In the composition formula (A7), $-1 < \delta < 1$, $0 < a < 1.5$, $0 < (3-3\delta-a)$, $0 < (1+\delta-a)$, $0 \leq x \leq 6$, $0 \leq y \leq 6$, and $(x+y) \leq 6$ are satisfied.

The above configuration can further enhance the ionic conductivity of the halide solid electrolyte. Thus, the charge and discharge efficiency of the battery 2000 can further be enhanced.

The halide solid electrolyte may be represented by the following composition formula (A8).

$$Li_{3-3\delta-2a}Y_{1+\delta-a}Me_aCl_{6-x-y}Br_xI_y \qquad \text{Formula (A8)}$$

In the composition formula (A8), Me includes at least one selected from the group consisting of Ta and Nb. The symbol Me may be at least one selected from the group consisting of Ta and Nb.

In the composition formula (A8), $-1 < \delta < 1$, $0 < a < 1.2$, $0 < (3-3\delta+2a)$, $0 < (1+\delta-a)$, $0 \leq x \leq 6$, $0 \leq y \leq 6$, and $(x+y) \leq 6$ are satisfied.

The above configuration can further enhance the ionic conductivity of the halide solid electrolyte. Thus, the charge and discharge efficiency of the battery 2000 can further be enhanced.

The element X (= anion) included in the halide solid electrolyte includes at least one selected from the group consisting of F, Cl, Br, and I, and may further include oxygen.

The above configuration can further enhance the ionic conductivity of the halide solid electrolyte. Thus, the charge and discharge efficiency of the battery 2000 can further be enhanced.

$LisYXe$, $Li_2MgX_4$, $Li_2FeX_4$, $Li(Al,Ga,In)X_4$, $Li_3(Al,Ga,In)X_6$, or the like can be used as the halide solid electrolyte. The symbol X is at least one selected from the group consisting of F, Cl, Br, and I.

In the present specification, an expression, for example, "(Al,Ga,In)" in a chemical formula refers to at least one element selected from the group of elements in the parentheses. In other words, the expression "(Al,Ga,In)" is synonymous with "at least one selected from the group consisting of Al, Ga, and In".

The halide solid electrolyte may include Li, M2, O, and X. Here, M2 may be at least one selected from the group consisting of Ta and Nb. The symbol X may be at least one selected from the group consisting of Cl, Br, and I. To further increase the lithium ion conductivity, the halide solid electrolyte may substantially consist of Li, M2, O, and X. Here, "substantially consisting of Li, M2, O, and X" means that a molar ratio of a sum of the amounts of substance of Li, M2, O, and X to a sum of the amounts of substance of all elements of the halide solid electrolyte is 90% or more. In one example, the molar ratio may be 95% or more.

The halide solid electrolyte may be free of sulfur. The above configuration can reduce generation of a hydrogen sulfide gas. Therefore, a battery with enhanced safety can be achieved.

As the oxide solid electrolyte can be used a NASICON solid electrolyte typified by $LiTi_2(PO_4)_3$ and an element-substituted substance thereof; a $(LaLi)TiO_3$-based perovskite solid electrolyte; a LISICON solid electrolyte typified by $Li_{14}ZnGe_4O_{16}$, $Li_4SiO_4$, $LiGeO_4$ and an element-substituted substance thereof; a garnet solid electrolyte typified by $Li_7La_3Zr_2O_{12}$ and an element-substituted substance thereof; $Li_3PO_4$ or an N-substituted substance thereof; or a glass or glass ceramic that includes a Li-B-O compound such as $LiBO_2$ or $Li_3BO_3$ as a base and to which $Li_2SO_4$, $Li_2CO_3$, or the like has been added.

A compound of a polymer compound and a lithium salt can be used as the polymer gel electrolyte. The polymer compound may have an ethylene oxide structure. The polymer compound having an ethylene oxide structure can include a large amount of a lithium salt, and thus can further increase the ionic conductivity. $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, $LiC(SO_2CF_3)_3$, or the like can be used as the lithium salt. One of the lithium salts may be used alone, or a mixture of two or more of the lithium salts may be used. The polymer gel electrolyte may include an organic solvent to be gelated.

$LiBH_4$-LiI, $LiBH_4$-$P_2S_5$, or the like can be used as the complex hydride solid electrolyte.

The shape of the second solid electrolyte material 106 is not limited to a particular shape. The shape of the second solid electrolyte material 106 is, for example, the shape of a needle, a sphere, or an ellipsoid. The second solid electrolyte material 106 may have the shape of a particle. When the second solid electrolyte material 106 has the shape of a particle (for example, in the shape of a sphere), the median diameter of the second solid electrolyte material 106 may be 100 μm or less. When the median diameter is 100 μm or less, the positive electrode active material 104 (or the coated active material 110) and the second solid electrolyte material 106 can be in a favorable dispersion state in the positive electrode 101. Therefore, the charge and discharge characteristics of the battery 2000 are enhanced. The median diameter may be 10 μm or less, or 1 μm or less. When the median diameter of the second solid electrolyte material 106 is smaller than the median diameter of the positive electrode active material 104, the positive electrode active material 104 (or the coated active material 110) and the second solid electrolyte material 106 can be in a favorable dispersion state in the positive electrode 101.

Herein, the median diameter of particles means the particle diameter (d50) at a cumulative volume percentage of 50% in a volume-based particle size distribution measured by a laser diffraction-scattering method.

The positive electrode active material 104 and the second solid electrolyte material 106 are separated by the first solid electrolyte material 105. The positive electrode active material 104 and the second solid electrolyte material 106 are not necessarily in contact with each other. Because the first solid electrolyte material 105 having high durability lies between the positive electrode active material 104 and the second solid electrolyte material 106, oxidative decomposition of the second solid electrolyte material 106 is reduced. Thus, the durability of the battery 2000 is further enhanced.

A thickness of the first solid electrolyte material 105 as a coating layer may be 1 nm or more and 500 nm or less.

When the thickness of the first solid electrolyte material 105 is 1 nm or more, oxidative decomposition of the second solid electrolyte material 106 is sufficiently reduced by reducing a direct contact between the positive electrode active material 104 and the second solid electrolyte material 106. Consequently, the charge and discharge efficiency of the battery 2000 is enhanced. When the thickness of the first solid electrolyte material 105 is 500 nm or less, an increase in an internal resistance of the battery 2000 due to the first solid electrolyte material 105 can be reduced. Consequently, the energy density of the battery 2000 is increased.

The method for measuring the thickness of the first solid electrolyte material 105 is not limited to a particular one. For example, the thickness of the first solid electrolyte material 105 can be measured by directly observing the first solid electrolyte material 105 using a transmission electron microscope.

A proportion of a mass of the first solid electrolyte material 105 to a mass of the positive electrode active material 104 may be, in percentage terms, 0.01% or more and 30% or less.

When the mass proportion is 0.01% or more, oxidative decomposition of the second solid electrolyte material 106 can be reduced by reducing a direct contact between the positive electrode active material 104 and the second solid electrolyte material 106. Hence, the charge and discharge efficiency of the battery can be enhanced. When the mass proportion is 30% or less, the first solid electrolyte material 105 is not too thick. Hence, the internal resistance of the battery can be sufficiently reduced and therefore the energy density of the battery 2000 can be increased.

The first solid electrolyte material 105 may coat the entire surface of the positive electrode active material 104. In this case, a side reaction of the second solid electrolyte material 106 can be reduced by reducing a direct contact between the positive electrode active material 104 and the second solid electrolyte material 106. Consequently, the charge and discharge characteristics of the battery 2000 can be further increased, and an increase of the internal resistance of the battery 2000 during charging can be reduced.

The first solid electrolyte material 105 may coat only a portion of the surface of the positive electrode active material 104. A plurality of particles of the positive electrode active material 104 are in direct contact with each other on their portions not coated by the first solid electrolyte material 105. This enhances the electron conductivity between the particles of the positive electrode active material 104. As a result, the battery 2000 can operate at high power.

The first solid electrolyte material 105 may coat 30% or more, 60% or more, or 90% or more of the surface of the positive electrode active material 104. The first solid electrolyte material 105 may coat substantially the entire surface of the positive electrode active material 104.

At least a portion of the surface of the positive electrode active material 104 may be coated by a coating material having a composition different from that of the first solid electrolyte material 105. Examples of the coating material include a sulfide solid electrolyte, an oxide solid electrolyte, and a halide solid electrolyte. Examples of the oxide solid electrolyte used as the coating material include a Li-Nb-O compound such as LiNbOs, a Li-B-O compound such as $LiBO_2$ and $Li_3BO_3$,

a Li-Al-O compound such as $LiAlO_2$, a Li-Si-O compound such as $Li_4SiO_4$, a Li-S-O compound such as $Li_2SO_4$, a Li-Ti-O compound such as $Li_4T_{15}O_{12}$, a Li-Zr-O compound such as $Li_2ZrO_3$, a Li-Mo-O compound such as $Li_2MoO_3$, a Li-V-O compound such as $LiV_2O_5$, a Li-W-O compound such as $Li_2WO_4$, and a Li-P-O compound such as $Li_3PO_4$.

The above configuration can further enhance the oxidation resistance of the positive electrode 101. Consequently, an increase of the internal resistance of the battery 2000 during charging can be reduced.

The positive electrode active material 104 includes a material having properties of occluding and releasing metal ions such as lithium ions. As the positive electrode active material 104 can be used a lithium-containing transition metal oxide, a transition metal fluoride, a polyanion material, a fluorinated polyanion material, a transition metal sulfide, a transition metal oxysulfide, a transition metal oxynitride, or the like. In particular, when a lithium-containing transition metal oxide is used as the positive electrode active material 104, it is possible to reduce a manufacturing cost of the battery 2000 and increase an average discharge voltage.

The positive electrode active material 104 may include lithium nickel cobalt manganese oxide. The positive electrode active material 104 may be lithium nickel cobalt manganese oxide. For example, the positive electrode active material 104 may be $Li(NiCoMn)O_2$.

This configuration can further increase the energy density of the battery 2000 and the charge and discharge efficiency of the battery 2000.

The shape of the positive electrode active material 104 is not limited to a particular shape. The shape of the positive electrode active material 104 is, for example, the shape of a needle, a sphere, or an ellipsoid. The positive electrode active material 104 may have the shape of a particle.

The median diameter of the positive electrode active material 104 may be 0.1 $\mu$m or more and 100 $\mu$m or less.

When the median diameter of the positive electrode active material 104 is 0.1 $\mu$m or more, the positive electrode active material 104 (or the coated active material 110) and the second solid electrolyte material 106 can be in a favorable dispersion state in the positive electrode 101. Thus, the charge and discharge efficiency of the battery 2000 is enhanced. When the median diameter of the positive electrode active material 104 is 100 $\mu$m or less, diffusion of lithium in the positive electrode active material 104 is fast. Therefore, the battery 2000 can operate at high power.

A volume proportion "v1:100 - v1" may satisfy $30 \leq v1 \leq 95$, where v1 is a volume of the positive electrode active material 104 and 100 - v1 is a volume of the second solid electrolyte material 106. The symbol v1 represents a proportion of a volume of the positive electrode active material 104 in a sum of the volumes of the positive electrode active material 104 and the second solid electrolyte material 106. When $30 \leq v1$ is satisfied, a sufficient energy density of the battery 2000 can be achieved. When $v1 \leq 95$ is satisfied, the battery 2000 can operate at high power.

The negative electrode 103 includes a negative electrode active material 107. The negative electrode active material 107 is a material having properties of occluding and releasing metal ions such as lithium ions.

A metal material, a carbon material, an oxide, a nitride, a tin compound, a silicon compound, or the like can be used as the negative electrode active material 107. The metal material may be an elemental metal. The metal material may be an alloy. Examples of the metal material include lithium metal and a lithium alloy. Examples of the carbon material include natural graphite, coke, semi-graphitized carbon, carbon fibers, spherical carbon, artificial graphite, and amorphous carbon. In terms of the capacity density, at least one selected from the group consisting of silicon (Si), tin (Sn), a silicon compound, and a tin compound is suitably used.

The negative electrode active material 107 may include an oxide material.

This configuration can increase the output of the battery 2000 and the capacity of the battery 2000.

The negative electrode active material 107 may include lithium titanate as the oxide material.

This configuration can increase the output of the battery 2000 and enhance the durability of the battery 2000.

The negative electrode 103 may include a solid electrolyte. The second solid electrolyte material 106 included in the positive electrode 101 may be used as the solid electrolyte. The above configuration increases the lithium ion conductivity inside the negative electrode 103 and can allow the battery 2000 to operate at high power.

The median diameter of the negative electrode active material 107 may be 0.1 $\mu$m or more and 100 $\mu$m or less. When the median diameter of the negative electrode active material 107 is 0.1 $\mu$m or more, the negative electrode active material 107 and the solid electrolyte can be in a favorable dispersion state in the negative electrode 103. Thus, the charge and discharge characteristics of the battery 2000 are enhanced. When the median diameter of the negative electrode active material 107 is 100 $\mu$m or less, diffusion of lithium in the negative electrode active material 107 is fast. Therefore, the battery 2000 can operate at high power.

The median diameter of the negative electrode active material 107 may be greater than the median diameter of the solid electrolyte. This allows the negative electrode active material 107 and the solid electrolyte to be in a favorable dispersion state.

A volume proportion "v2:100 - v2" may satisfy $30 \leq v2 \leq 95$, where v2 is a volume of the negative electrode active material 107 and 100 - v2 is a volume of the solid electrolyte. The symbol v2 represents a proportion of the volume of the negative electrode active material 107 in a sum of the volumes of the negative electrode active material 107 and the solid electrolyte. When $30 \leq v2$ is satisfied, a sufficient energy density of the battery 2000 can be achieved. When $v2 \leq 95$ is

satisfied, the battery 2000 can operate at high power.

A thickness of the positive electrode 101 may be 10 $\mu$m or more and 500 $\mu$m or less. When the thickness of the positive electrode 101 is 10 $\mu$m or more, a sufficient energy density of the battery 2000 can be achieved. When the thickness of the positive electrode 101 is 500 $\mu$m or less, the battery 2000 can operate at high power. That is, when the thickness of the positive electrode 101 is adjusted in the appropriate range, a sufficient energy density of the battery 2000 can be achieved and the battery 2000 can operate at high power.

The electrolyte layer 102 is a layer including an electrolyte. The electrolyte is, for example, a solid electrolyte. That is, the electrolyte layer 102 may be a solid electrolyte layer.

The second solid electrolyte material 106 included in the positive electrode 101 may be used as the solid electrolyte included in the electrolyte layer 102. That is, the halide solid electrolyte, the sulfide solid electrolyte, the oxide solid electrolyte, the polymer gel electrolyte, or the complex hydride solid electrolyte may be used as the solid electrolyte included in the electrolyte layer 102.

The above configuration can achieve a sufficient energy density of the battery 2000 and allows the battery 2000 to operate at high power.

The electrolyte layer 102 may include the solid electrolyte as its main component. That is, the solid electrolyte may account for 50% or more of the entire electrolyte layer 102 in mass percentage.

The above configuration can further enhance the charge and discharge characteristics of the battery 2000.

The solid electrolyte may account for 70% or more of the entire electrolyte layer 102 in mass percentage.

The above configuration can further enhance the charge and discharge characteristics of the battery 2000.

The electrolyte layer 102 may include the solid electrolyte as its main component and may further include inevitable impurities. Examples of the inevitable impurities include a starting material, a by-product, a decomposition product, and the like involved in synthesis of the solid electrolyte.

The solid electrolyte may account for 100% of the entire electrolyte layer 102 in mass percentage, excluding inevitable impurities.

The above configuration can further enhance the charge and discharge characteristics of the battery 2000.

The electrolyte layer 102 may be composed only of the solid electrolyte.

The electrolyte layer 102 may include two or more solid electrolytes. For example, the electrolyte layer 102 may include, for example, a halide solid electrolyte and a sulfide solid electrolyte.

The electrolyte layer 102 may be composed of a plurality of layers stacked on each other. Each of the layers includes a solid electrolyte having a composition different from those of the other layers. For example, the electrolyte layer 102 includes a first layer and a second layer lying on the first layer, the first layer including a halide solid electrolyte, the second layer including a sulfide solid electrolyte. The first layer including a halide solid electrolyte may be disposed in contact with the positive electrode 101, and the second layer including a sulfide solid electrolyte may be disposed in contact with the negative electrode 103. In this case, the thermal stability, the output properties, and the energy density of the battery 2000 can be increased.

A thickness of the electrolyte layer 102 may be 1 $\mu$m or more and 300 $\mu$m or less. When the thickness of the electrolyte layer 102 is 1 $\mu$m or more, a short-circuit between the positive electrode 101 and the negative electrode 103 is less likely to happen. When the thickness of the electrolyte layer 102 is 300 $\mu$m or less, the battery 2000 can operate at high power.

A thickness of the negative electrode 103 may be 10 $\mu$m or more and 500 $\mu$m or less. When the thickness of the negative electrode 103 is 10 $\mu$m or more, a sufficient energy density of the battery 2000 can be achieved. When the thickness of the negative electrode 103 is 500 $\mu$m or less, the battery 2000 can operate at high power.

At least one selected from the group consisting of the positive electrode 101, the electrolyte layer 102, and the negative electrode 103 may include a binder to enhance the adhesion between the particles. Examples of the binder include polyvinylidene fluoride, polytetrafluoroethylene, polyethylene, polypropylene, aramid resin, polyamide, polyimide, polyamide-imide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyethersulfone, hexafluoropolypropylene, styrene-butadiene rubber, and carboxymethylcellulose. As the binder can also be used a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. A mixture of two or more materials selected from these materials may also be used as the binder.

At least one selected from the group consisting of the positive electrode 101 and the negative electrode 103 may include a conductive additive to increase the electron conductivity. As the conductive additive can be used, for example, graphites such as natural graphite and artificial graphite; carbon blacks such as acetylene black and ketjen black; conductive fibers such as carbon fibers and metal fibers; fluorinated carbon; metal powders such as an aluminum powder; conductive whiskers such as a zinc oxide whisker and a potassium titanate whisker; conductive metal oxides such as titanium oxide; and conductive polymer compounds such as polyaniline, polypyrrole, and polythiophene. Cost reduction can be achieved by using a conductive carbon additive as the conductive additive.

The shape of the battery 2000 is, for example, a coin type, a cylindrical type, a prismatic type, a sheet type, a button type, a flat type, or a layer-built type.

<<Method for manufacturing fluorine-containing solid electrolyte>>

The fluorine-containing solid electrolyte can be manufactured by the following method.

A plurality of raw material powders are prepared according to a target composition and mixed. The raw material powder can be a fluoride. The fluoride may be a compound consisting of a plurality of elements including fluorine.

For example, in the case that the target composition is $Li_{2.7}Ti_{0.3}Al_{0.7}F_6$, LiF, $TiF_4$, and $AlF_3$ are prepared as the raw material powders in a molar ratio of approximately 2.7:0.3:0.7 and are mixed. The raw material powders may be mixed at a molar ratio adjusted in advance so as to negate a composition change that can occur in the synthesis process.

The raw material powders may be mixed using a mixing machine such as a planetary ball mill. The raw material powders are caused to react by mechanochemical milling to obtain a reaction product. The reaction product may be fired in vacuum or an inert atmosphere. Alternatively, a mixture of the raw material powders may be fired in vacuum or an inert atmosphere to obtain a reaction product. The firing is performed, for example, at 100°C or higher and 400°C or lower for 1 hour or longer. To suppress a composition change that can be induced by the firing, the raw material powders may be fired in an airtight container such as a quartz tube. A fluorine-containing solid electrolyte is obtained through these steps.

The halide solid electrolyte represented by the composition formula (1) can be manufactured by the following method. The element types of M and X in the composition formula (1) can be determined by appropriately selecting the types of the raw material powders. The values of $\alpha$, $\beta$, and $\gamma$ in the composition formula (1) can be adjusted by adjusting the types of the raw material powders, a blending ratio between the raw material powders, and the synthesis process.

<<Method for manufacturing coated active material>>

The coated active material 110 can be manufactured by the following method.

A powder of the positive electrode active material 104 and a powder of the first solid electrolyte material 105 are mixed at an appropriate ratio to obtain a mixture. The mixture is subjected to milling to provide mechanical energy to the mixture. A mixing machine such as a ball mill can be used for the milling. The milling may be performed in a dry inert atmosphere to suppress oxidation of the materials.

The coated active material 110 may be manufactured by a dry composite particle forming method. Processing by the dry composite particle forming method includes providing mechanical energy generated by at least one selected from the group consisting of impact, compression, and shearing to the positive electrode active material 104 and the first solid electrolyte material 105. The positive electrode active material 104 and the first solid electrolyte material 105 are mixed at an appropriate ratio.

The apparatus used in the manufacturing of the coated active material 110 is not limited to a particular one, and can be an apparatus capable of providing mechanical energy generated by impact, compression, and shearing to the mixture of the positive electrode active material 104 and the first solid electrolyte material 105. Example of the apparatus capable of providing such mechanical energy include a compression shear type processing apparatus (composite particle forming machine) such as a ball mill, "Mechanofusion" (manufactured by HOSOKAWA MICRON CORPORATION), or "Nobilta" (manufactured by HOSOKAWA MICRON CORPORATION).

Mechanofusion is a composite particle forming machine to which a dry mechanical composite forming technique in which high mechanical energy is applied to a plurality of different raw material powders is applied. Mechanofusion provides mechanical energy generated by compression, shearing, and friction to raw material powders added between a rotating vessel and a press head. Composite particle formation is thereby performed.

Nobilta is a composite particle forming machine to which a dry mechanical composite forming technique developed from a composite particle forming technique is applied for forming a composite from raw materials being nanoparticles. Nobilta manufactures composite particles by providing mechanical energy generated by impact, compression, and shearing to a plurality of raw material powders.

In a horizontal cylindrical mixing vessel of Nobilta, a rotor disposed to leave a given amount of clearance between the rotor and the inner wall of the mixing vessel rotates at high speed to repeat a process of forcing raw material powders to go through the clearance. Through this processing, the force of impact, compression, and shearing acts on the mixture, and thereby composite particles of the positive electrode active material 104 and the first solid electrolyte material 105 can be produced. The thickness of the coating layer, the specific surface area of the coated active material, and the like can be controlled by adjusting conditions such as the rotation speed of the rotor, the processing time, and the amounts of the raw material powders added.

EXAMPLES

Hereinafter, the details of the present disclosure will be described with reference to examples and comparative examples.

(Example 1)

[Production of sulfide solid electrolyte]

In an argon glove box with a dew point of -60°C or lower, $Li_2S$ and $P_2S_5$ being raw material powders were weighed at a molar ratio of $Li_2S:P_2S_5 = 75:25$. These were crushed and mixed in a mortar to obtain a mixture. Subsequently, milling was performed using a planetary ball mill (Type P-7 manufactured by Fritsch GmbH) at 510 rpm for 10 hours. A solid electrolyte in a glass state was obtained in this manner. The solid electrolyte in a glass state was subjected to a thermal treatment in an inert atmosphere at 270°C for 2 hours. $Li_2S$-$P_2S_5$ being a sulfide solid electrolyte in the form of a glass ceramic was thereby obtained.

[Production of first solid electrolyte material]

LiF, $TiF_4$, and $AlF_3$ being raw material powders were prepared at a molar ratio of $LiF:TiF_4:AlF_3 = 2.7:0.3:0.7$ in an argon glove box with a dew point of -60°C or lower. These were crushed and mixed in a mortar to obtain a mixture. Milling of the mixture was performed using a planetary ball mill at 500 rpm for 12 hours. A powder of a fluorine-containing solid electrolyte was obtained in this manner as a first solid electrolyte material. The composition of the first solid electrolyte material is represented by $Li_{2.7}Ti_{0.3}Al_{0.7}F_6$ (hereinafter referred to as "LTAF").

[Production of coated active material]

A powder of $Li(NiCoAl)O_2$ (hereinafter referred to as "NCA") was prepared as a positive electrode active material. Next, a coating layer made of the LTAF was formed on the surface of the NCA. The coating layer was formed by compression shear processing using a composite particle forming machine (NOB-MINI manufactured by HOSOKAWA MICRON CORPORATION). Specifically, the NCA and the LTAF were weighed at a volume ratio of 95.4:4.6, and were processed with a blade clearance of 2 mm, at a rotation rate of 6000 rpm, and for a processing time of 50 minutes. A coated active material was obtained in this manner.

[Production of positive electrode]

The coated active material and the sulfide solid electrolyte were prepared at a volume ratio of 60:40. Relative to 100 parts by mass of the positive electrode active material included in the coated active material, 2.9 parts by mass of the conductive additive was prepared. Relative to 100 parts by mass of the positive electrode active material included in the coated active material, 0.4 parts by mass of a binder was prepared. Using tetralin as a solvent, the coated active material, the sulfide solid electrolyte, the conductive additive, and the binder were mixed in an ultrasonic disperser to obtain a slurry containing the coated active material. The slurry was applied to an aluminum current collector and dried to obtain a positive electrode.

[Production of negative electrode]

$Li_4Ti_5O_{12}$ being a negative electrode active material and the sulfide solid electrolyte were prepared at a volume ratio of 65:35. Relative to 100 parts by mass of the negative electrode active material, 1.1 parts by mass of a conductive additive was prepared. Relative to 100 parts by mass of the negative electrode active material, 0.85 parts by mass of the binder was prepared. Using tetralin as a solvent, the negative active material, the sulfide solid electrolyte, the conductive additive, and the binder were mixed in an ultrasonic disperser to obtain a slurry containing the negative active material. The slurry was applied to a nickel current collector and dried to obtain a negative electrode.

[Production of secondary battery]

An electrolyte layer made of the sulfide solid electrolyte was disposed between the positive electrode and the negative electrode, and these three were pressure-molded. After that, a lead terminal was attached to each of the current collectors of the positive electrode and the negative electrode to obtain a battery body. A laminate packaging material was sealed with the battery body inside, and thus a laminated secondary battery was obtained. The battery body was circular in plan view. The negative electrode and the electrolyte layer had the same diameter. The positive electrode had a slightly smaller diameter than that of the electrolyte layer.

(Examples 2 to 11)

The amount of the slurry applied to the nickel current collector was changed for the production of the negative electrode, so that negative electrodes having different thicknesses were obtained. Secondary batteries of Examples 2 to 11 were produced in the same manner as in Example 1 using these negative electrodes. The diameters of the negative electrodes were unchanged.

(Comparative Examples 1 to 11)

LiNbOs was used instead of LTAF for the production of the coated active material. The amount of the slurry applied to the nickel current collector was changed for the production of the negative electrode. Secondary batteries of Comparative Examples 1 to 11 were produced in the same manner as in Examples, except for these points.

[Ratio a of capacity of negative electrode to capacity of positive electrode]

Ratios a of the batteries of Examples and Comparative Examples were calculated using the following formula. The ratio a is a ratio of the capacity of the negative electrode to the capacity of the positive electrode. As a charge capacity per unit mass of the positive electrode active material was defined 200 mAh/g (theoretical capacity). As a charge capacity per unit mass of the negative electrode active material was defined 175 mAh/g (theoretical capacity). The symbol Wx is the mass (unit: g) of the positive electrode active material included in the positive electrode. The symbol Wy is the mass (unit: g) of the negative electrode active material included in the negative electrode active material.

$$\text{Ratio a} = (175 \times Wy) \div (200 \times Wx)$$

The mass Wx was calculated by the following method. Specifically, after the production of the positive electrode, the mass of the positive electrode was measured using an electronic scale. The mass of the positive electrode mixture and that of the current collector are included in the measured value. The mass of an aluminum foil having the same area as the area of the current collector used was subtracted from the measured value to determine the mass W of the positive electrode mixture. The mass W of the positive electrode mixture was multiplied by a mass proportion of the positive electrode active material in the positive electrode mixture to determine the mass Wx of the positive electrode active material included in the positive electrode. The mass Wy of the negative electrode active material was calculated by the same method.

[Measurement of resistance]

Resistance increase rates were measured using the secondary batteries of Examples and Comparative Examples by the following method. First, the charge status was adjusted by constant current constant voltage discharge so that the battery voltage would be 2.02 V. After that, a battery resistance was measured by an AC impedance method.

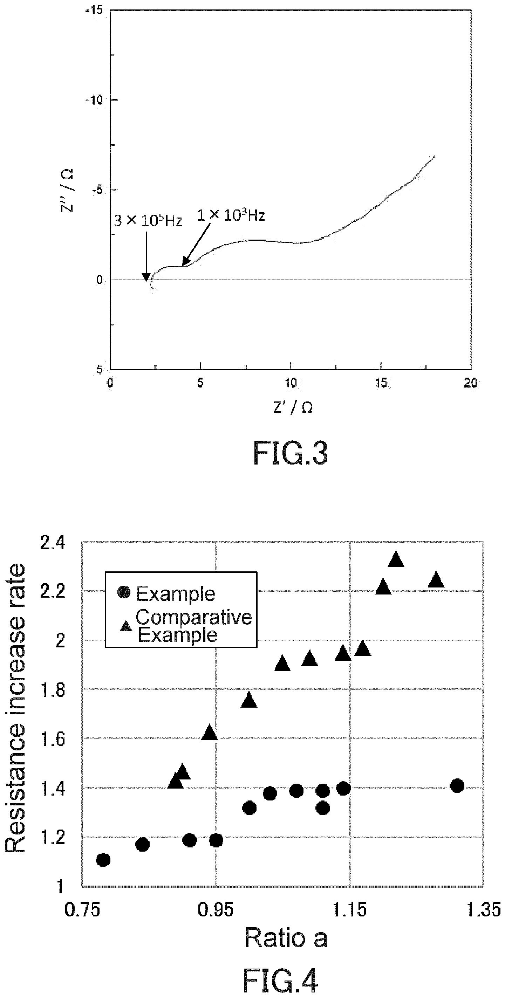

FIG. 3 is a graph showing the result of measuring the battery resistance of Comparative Example 3. The battery resistance was determined by waveform fitting for a semicircular-arc-shaped waveform appearing around $3 \times 10^5$ Hz to $10^3$ Hz. Specifically, a value obtained by subtracting a resistance value at a point of intersection between a fitting curve of the semicircular-arc-shaped waveform and the real axis on the high frequency side from a resistance value at a point of intersection between the fitting curve of the semicircular-arc-shaped waveform and the real axis on the low frequency side was defined as the battery resistance.

[Measurement of resistance increase rate]

The charge status was adjusted by constant current constant voltage charge so that the battery voltage would be 2.9 V. After that, a constant voltage test in which the voltage was maintained at 2.9 V for a week was performed at a temperature of 60°C. In other words, constant voltage (CV) charging continued for a week.
The charge status of the battery having undergone the constant voltage test was adjusted by constant current constant voltage discharge so that the battery voltage would be 2.02 V. After that, a battery resistance was measured by an AC impedance method. A ratio of the battery resistance before the constant voltage test to the battery resistance after the constant voltage test at 2.9 V was calculated as the resistance increase rate. Table 1 shows the results. The resistance increase rate is a measure of the durability of a battery. A small resistance increase rate means a high durability of the battery. A large resistance increase rate means a poor durability of the battery.

[Measurement of discharge capacity]

The charge status was adjusted by constant current constant voltage charge so that the battery voltage would be 2.7 V. After that, the battery was discharged to 1.5V at a current rate of 1/3C. An actual discharge capacity (mAh/g) was calculated by dividing a capacity determined by discharging to 1.5 V by the mass of the negative electrode active material.

[Table 1]

|  | Ratio a of capacity of negative electrode to capacity of positive electrode | Resistance increase rate |
|---|---|---|
| Example 1 | 0.78 | 1.11 |
| Example 2 | 0.84 | 1.17 |
| Example 3 | 0.91 | 1.19 |
| Example 4 | 0.95 | 1.19 |
| Example 5 | 1.00 | 1.32 |
| Example 6 | 1.03 | 1.38 |
| Example 7 | 1.07 | 1.39 |
| Example 8 | 1.11 | 1.32 |
| Example 9 | 1.11 | 1.39 |
| Example 10 | 1.14 | 1.40 |
| Example 11 | 1.31 | 1.41 |
| Comparative Example 1 | 0.90 | 1.47 |
| Comparative Example 2 | 0.89 | 1.43 |
| Comparative Example 3 | 0.94 | 1.63 |
| Comparative Example 4 | 1.00 | 1.76 |
| Comparative Example 5 | 1.05 | 1.91 |
| Comparative Example 6 | 1.09 | 1.93 |
| Comparative Example 7 | 1.14 | 1.95 |
| Comparative Example 8 | 1.17 | 1.97 |
| Comparative Example 9 | 1.20 | 2.22 |
| Comparative Example 10 | 1.22 | 2.33 |
| Comparative Example 11 | 1.28 | 2.25 |

Table 1 shows the ratios a and the resistance increase rates of the batteries of Examples 1 to 11 and Comparative Examples 1 to 11. FIG. 4 is a graph corresponding to Table 1. That is, FIG. 4 is a graph showing a relation between the ratio a and the resistance increase rate of each of the batteries of Examples 1 to 11 and Comparative Examples 1 to 11. When the ratio a of the capacity of the negative electrode to the capacity of the positive electrode is in the range of $0.78 \leq a \leq 1.31$, the resistance increase rates of the batteries of Examples are lower than those of the batteries of Comparative Examples. That is, when the ratio a was 0.78 or more, the durability enhancement effect of the fluorine-containing solid electrolyte (LTAF) was sufficiently achieved. When the ratio a as 1.31 or less, the proportion of the negative electrode in the battery was not too high and a high energy density was able to be maintained.

When the ratio a was 0.78 or more and less than 1.00, desirably 0.78 or more and 0.95 or less, a remarkable durability enhancement effect was achieved.

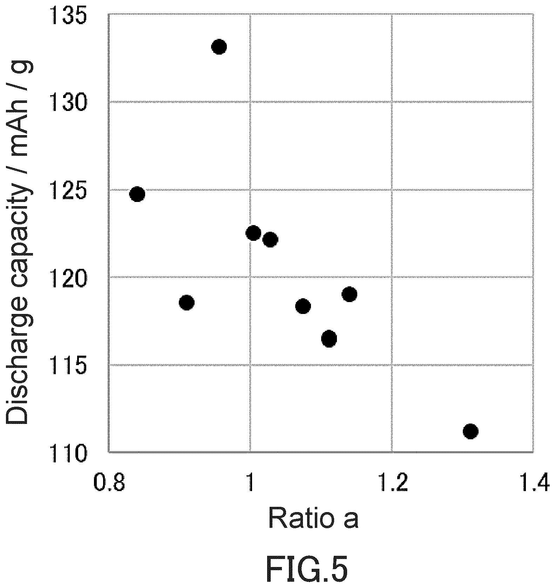

FIG. 5 is a graph showing a relation between the ratio a and an actual discharge capacity. When the ratio a was 1.20 or less or 1.14 or less, a high discharge capacity, namely a high energy density, was able to be maintained.

When the ratio a was 1.03 or less, an even higher discharge capacity, namely a high energy density, was able to be maintained.

When the ratio a was 0.95, the highest discharge capacity was able to be obtained. When the ratio a was less than 1.00, the discharge capacity tended to be enhanced.

In summary, these results indicate that the ratio a is desirably 0.78 or more and 1.03 or less, and more desirably 0.78 or more and less than 1.00. To avoid an excessively large difference between the capacity of the positive electrode and that of the negative electrode, the ratio a may be 0.84 or more and 1.03 or less, 0.91 or more and 1.03 or less, 0.84 or more and less than 1.00, or 0.91 or more and less than 1.00.

INDUSTRIAL APPLICABILITY

The battery of the present disclosure can be used, for example, as an all-solid-state lithium secondary battery.

**Claims**

1. A battery comprising:

   a positive electrode;
   a negative electrode; and
   an electrolyte layer disposed between the positive electrode and the negative electrode, wherein
   the positive electrode comprises a positive electrode active material and a first solid electrolyte material coating at least a portion of a surface of the positive electrode active material,
   the first solid electrolyte material comprises Li, M1, and F, where M1 is at least one selected from the group consisting of Ti, Al, and Zr, and
   a ratio a of a capacity of the negative electrode to a capacity of the positive electrode satisfies $0.78 \leq a \leq 1.31$.

2. The battery according to claim 1, wherein the first solid electrolyte material comprises Ti as M1 and further comprises one or two elements selected from the group consisting of Ca, Mg, Al, Y, and Zr.

3. The battery according to claim 1 or 2, wherein the first solid electrolyte material comprises a Li-Ti-Al-F compound.

4. The battery according to claim 3, wherein the compound has a composition represented by $Li_{2.7}Ti_{0.3}Al_{0.7}F_6$.

5. The battery according to any one of claims 1 to 4, wherein the ratio a is 0.91 or more.

6. The battery according to any one of claims 1 to 5, wherein the ratio a is 1.20 or less.

7. The battery according to claim 6, wherein the ratio a is 1.03 or less.

8. The battery according to any one of claims 1 to 7, wherein

   the positive electrode further comprises a second solid electrolyte material, and
   the second solid electrolyte material has a composition different from a composition of the first solid electrolyte material.

9. The battery according to claim 8, wherein the second solid electrolyte material comprises a sulfide solid electrolyte.

10. The battery according to claim 8 or 9, wherein the positive electrode active material and the second solid electrolyte material are separated by the first solid electrolyte material.

11. The battery according to any one of claims 1 to 10, wherein the positive electrode active material comprises lithium nickel cobalt manganese oxide.

12. The battery according to any one of claims 1 to 11, wherein

   the negative electrode comprises a negative electrode active material, and
   the negative electrode active material comprises an oxide material.

**13.** The battery according to claim 12, wherein the oxide material is lithium titanate.

FIG.1

FIG.2

FIG.3

FIG.4

FIG.5

## INTERNATIONAL SEARCH REPORT

| International application No. |
|---|
| **PCT/JP2022/041716** |

### A. CLASSIFICATION OF SUBJECT MATTER

*H01M 4/131*(2010.01)i; *H01M 4/36*(2006.01)i; *H01M 4/485*(2010.01)i; *H01M 4/505*(2010.01)i; *H01M 4/525*(2010.01)i; *H01M 10/0562*(2010.01)i

FI: H01M4/131; H01M4/36 C; H01M4/525; H01M4/505; H01M4/485; H01M10/0562

According to International Patent Classification (IPC) or to both national classification and IPC

### B. FIELDS SEARCHED

Minimum documentation searched (classification system followed by classification symbols)

H01M4/131; H01M4/36; H01M4/485; H01M4/505; H01M4/525; H01M10/0562

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2021/187391 A1 (PANASONIC INTELLECTUAL PROPERTY MANAGEMENT CO., LTD.) 23 September 2021 (2021-09-23) paragraphs [0071]-[0237], example 7, fig. 2 | 1-12 |
| Y | | 1-13 |
| X | WO 2022/009806 A1 (TOYOTA JIDOSHA KK) 13 January 2022 (2022-01-13) paragraphs [0014]-[0052], fig. 1 | 1, 5-13 |
| Y | | 1-13 |
| Y | US 2013/0071745 A1 (MUN, Jun-Young) 21 March 2013 (2013-03-21) paragraphs [0023]-[0051], examples, fig. 2 | 1-13 |
| P, A | WO 2022/224505 A1 (PANASONIC INTELLECTUAL PROPERTY MANAGEMENT CO., LTD.) 27 October 2022 (2022-10-27) entire text | 1-13 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 December 2022** | **17 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/041716**

| Patent document cited in search report | | | Publication date (day/month/year) | Patent family member(s) | | | Publication date (day/month/year) |
|---|---|---|---|---|---|---|---|
| WO | 2021/187391 | A1 | 23 September 2021 | CN | 115152056 | A | |
| WO | 2022/009806 | A1 | 13 January 2022 | (Family: none) | | | |
| US | 2013/0071745 | A1 | 21 March 2013 | KR 10-2013-0030660 | | A | |
| WO | 2022/224505 | A1 | 27 October 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006244734 A